# EUROPÄISCHE PATENTSCHRIFT

(11) **EP 0 743 259 B1**
(45) Veröffentlichungstag und Bekanntmachung des Hinweises auf die Patenterteilung: **17.10.2001**
(21) Anmeldenummer: 96107292.3
(22) Anmeldetag: 08.05.1996
(51) Int. Cl.: B65D 47/20, B65D 47/08

(54) **Schlitzventil zum Verschliessen von Behältern**
Slit valve for dosing containers
Valve à fente pour fermer des récipients

(30) Priorität: 17.05.1995 DE 29508151 U
(43) Veröffentlichungstag der Anmeldung: 20.11.1996
(73) Patentinhaber: Georg Menshen GmbH + Co. KG, D-57413 Finnentrop (DE)
(72) Erfinder: Hins, Johannes, 59846 Sundern (DE)
(74) Vertreter: Schmidt, Horst, Dr.

(56) Entgegenhaltungen:
- EP-A- 0 442 379
- EP-A- 0 649 795
- GB-A- 2 158 049
- US-A- 5 271 531

## Beschreibung

Die Erfindung betrifft ein Schlitzventil zum Verschliessen einer Behälteröffnung und insbesondere ein Schlitzventil mit einem eine selbstdichtende schlitzförmige Ausgiessöffnung enthaltenden Membranteil mit gummielastischer Eigenschaft.

Bekannt ist es (FR-C-673 584, EP-B-395 380), das Schlitzventil aus einem Kautschuk- oder Silikongummimaterial separat zu formen und mit einem Behälter mechanisch dauerhaft zu verbinden, indem ein rohrförmiger Bereich des Behälters um eine flanschförmige Erweiterung des Schlitzventiles herumgebördelt wird. Bis zum gebrauchsfähigen Einsatz des Schlitzventiles sind daher eine Reihe von Formungs- und Montagevorgängen erforderlich, die das einsatzfertige Produkt entsprechend verteuern. Bekannt (EP-A-586 778) sind ferner vorgefertigte Schlitzventile mit Dichtflansch, die ebenfalls gänzlich aus einem der vorgenannten Materialien bestehen und mittels eines Kappenbefestigungsteiles an einer Behälteröffnung positioniert werden können. Bekannt ist es ferner (EP-A-442 379), das Membranteil durch einen Press-Prägevorgang in einem als Form dienenden Kappenteil auszubilden und damit zu verbinden, indem das Material des Schlitzventiles beim Prägen in Aussparungen nahe dem Kappenteilrand hineingedrückt wird, um eine mechanische Verankerung des Materials in den Aussparungen zu erhalten. Ein Umgangswandbereich des Schlitzventiles wird im übrigen durch das Kappenteil gegen ein Verformung bei einem Überdruck, nicht dagegen Unterdruck im Behälter lose abgestützt. Auch ist es bekannt (GB-A-2 158 049), das Schlitzventil und ein als Schraubkappe ausgebildetes Verschlussteil durch Mehrkomponenten-Spritzgiessen von unterschiedlich beschaffenen Kunststoffmaterialien einstückig integral auszubilden.

Ziel der Erfindung ist es, ein mit geringem Montageaufwand zum Verschliessen einer Behälteröffnung einsetzbares Schlitzventil der gattungsgemässen Art mit verbesserter Gebrauchseigenschaft und wirtschaftlicher Fertigungsmöglichkeit zu schaffen, indem die Zuverlässigkeit der Öffnungs- und Schliessfunktion unabhängig von den der Montage dienenden Aufbaumerkmalen optimiert werden kann.

Dieses Ziel wird erfindungsgemäss durch die Merkmale des Patentanspruches 1 gelöst. Danach stellt das Schlitzventil nach der Erfindung ein Formteil dar, das in einem Arbeitsgang durch Zweikomponenten-Spritzgiessen geformt wird, wie es grundsätzlich bekannt ist. Die unterschiedlichen Kunststoffmaterialien für den Membranteil und den Basisteil werden hierbei integral längs bestimmter Wandbereiche miteinander verbunden, so dass Ergebnis des Formungsvorganges ein im wesentlichen einsatzfertiges Produkt ist, bei dem lediglich die schlitzförmige Ausgiessöffnung durch einen anschliessenden Schneidvorgang in den Membranteil eingebracht werden muss. Die Kombination eines elastomeren Membranteiles mit einem Basisteil aus einem formstabileren Kunststoffmaterial ermöglicht es, dass das Schlitzventil als einsatzfertiges Bauelement bereitgestellt werden kann. Dabei ist, mit vorteilhafter Auswirkung auf die Schliess- und Öffnungsfunktion, der nachgiebige Membranteil bis auf seinen die Ausgiessöffnung enthaltenden zentralen Bereich durch den Membranteil zuverlässig abgestützt. Der Basisteil kann als Verschlusskappe ausgebildet sein, bei der der Membranteil ein integraler Bestandteil darstellt.

Gemäss einem anderen Aspekt der Erfindung umfasst eine Schlitzventilanordnung zum Verschliessen einer Behälteröffnung ein Schlitzventil mit einem eine schlitzförmige Ausgiessöffnung enthaltenden Membranteil aus einem thermoplastischen Elastomermaterial, der mit einem Basisteil aus einem thermoplastischen Kunststoffmaterial, das vom thermoplastischen Elastomermaterial verschieden ist, integral verbunden ist, und ein an einem Behälterteil montierbares Befestigungselement zur Fixierung des Schlitzventiles am Behälterteil mit einem integral angelenkten Deckelteil, der zwischen einer Freigabe- und Schliesstellung schwenkbar ist, und einem am Deckelteil angeformten Dichtring zur Eingriffnahme in der Schliesstellung des Deckelteiles mit einer Öffnung im Basisteil des Schlitzventiles, an der ein Bereich des Membranteiles, der die Ausgiessöffnung enthält, freiliegt.

Die Erfindung wird nachfolgend anhand von Ausführungsformen und der Zeichnung näher erläutert. Es zeigen:
Fig. 1 in geschnittener Ansicht ein erfindungsgemäss aufgebautes Schlitzventil,
Fig. 2 eine Schlitzventilanordnung mit einem Schlitzventil nach Fig. in Verbindung mit dessen Montage an einer Behälteröffnung,
Fig. 3 in fragmentarischer geschnittener Ansicht ein Formwerkzeug für das Zweikomponentenspritzgiessen des Schlitzventiles, und
Fig. 4 eine Schlitzventilanordnung mit einem Schlitzventil gemäss einer modifizierten Ausführungsform der Erfindung.

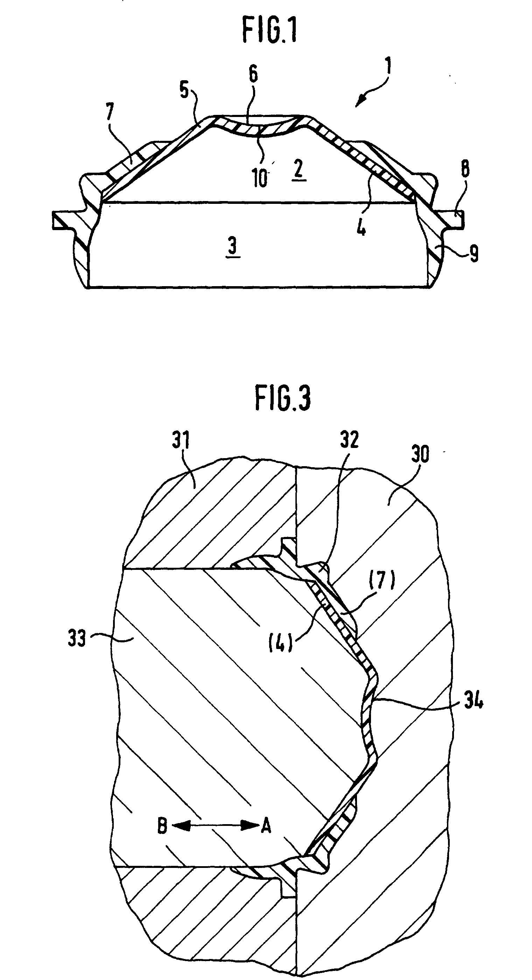

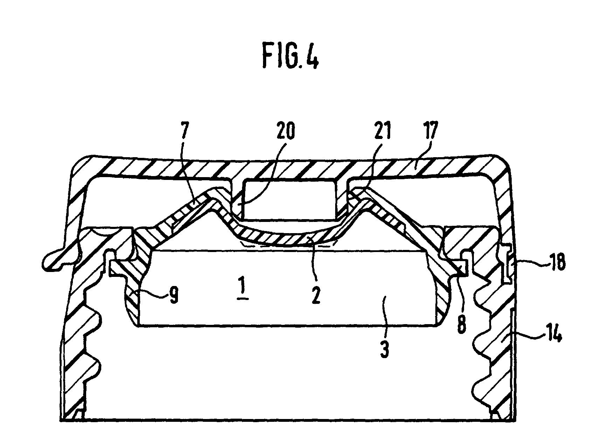

Nach Fig. 1 setzt sich ein Schlitzventil nach der Erfindung, welches das allgemeine Bezugszeichen 1 trägt, aus einem Membranteil 2 sowie einem Basisteil 3 zusammen, die aus unterschiedlichen Kunststoffmaterialien bestehen. Der Membranteil 2 und der Basisteil 3 sind integral miteinander verbunden. Das Schlitzventil 1 stellt demzufolge ein einstückiges Kunststofformteil dar, welches durch Zweikomponentenspritzgiessen in einem Arbeitsvorgang hergestellt wird, worauf nachfolgend in Verbindung mit Fig. 3 näher eingegangen wird.

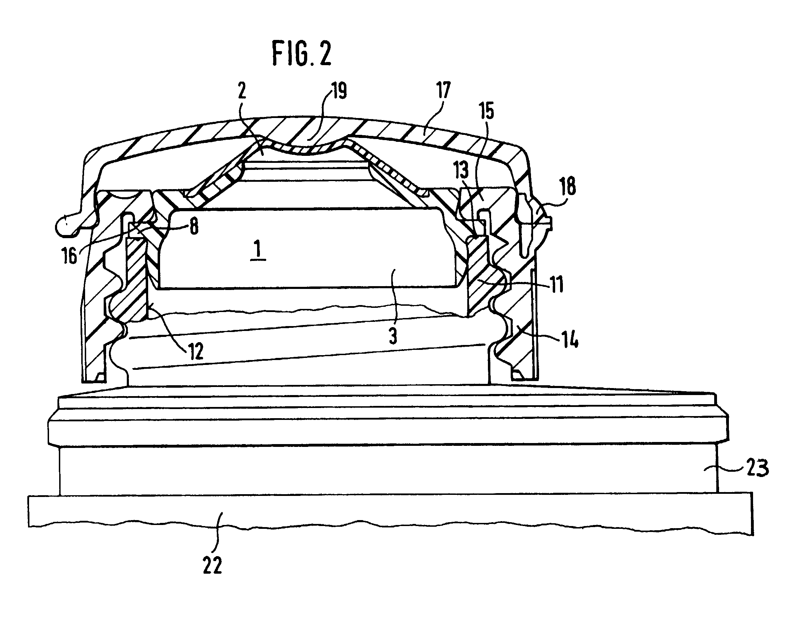

Das Schlitzventil 1 kann eine rotationssymmetrische Ausbildung haben, wobei der Membranteil 2 eine annähernd kegelstumpfförmige Konfiguration mit einem Umfangswandbereich 4 haben kann, längs dem der Membranteil 2 mit einer am Basisteil 3 vorgesehenen entsprechend kegelig verlaufenden Stützwand 7 in Verbindung steht. Bei der in Fig. 1 gezeigten Ausführungsform des Schlitzventiles 1 ist die Stützwand 7 oberseitig des Umfangswandbereiches 4 des Membranteiles 2 vorgesehen. Sie kann jedoch, wenn erwünscht, auch unterseitig angeformt sein, wie dies in Fig. 2 zu sehen ist. Ein zentraler Wandbereich 5 des Membranteiles 2 kann sich frei gummibalgartig verformen. Der zentrale Wandbereich 5 kann ferner eine zentrale Zone 6 umfassen, die zwischen einer konkaven und einer konvexen Position umgestülpt werden kann und in deren Mitte eine schlitzförmige Ausgiessöffnung 10 vorgesehen ist.

Die schlitzförmige Ausgiessöffnung 10 ist in der gezeigten konkaven Position der zentralen Zone 6 geschlossen und öffnet sich, wenn die zentrale Zone 6 unter einem von innen auf sie einwirkenden Druck in die konvexe Konfiguration gebracht wird. Die schlitzförmige Ausgiessöffnung 10 kann in Gestalt eines kurzen einfachen Einschnittes ausgebildet sein. Sie kann jedoch auch einen Einschnitt in Kreuzform oder dgl. darstellen.

Die schlitzförmige Ausgiessöffnung 10 ist aufgrund der gummielastischen Eigenschaften des Materials, aus dem der Membranteil 2 besteht, geschlossen, wenn sich der Membranteil 2 in der in Fig. 1 gezeigten Position mit konkaver zentraler Zone 6 befindet. Die schlitzförmige Ausgiessöffnung 10 bleibt geschlossen, solange ein auf die zentrale Zone 6 von innen einwirkender Druck einen bestimmten Grenzwert nicht überschreitet. Insbesondere kann der Grenzwert durch geeignete Dimensionierung des Membranteiles 2 so festgelegt werden, dass er höher als der Gefälledruck einer Flüssigkeit in einem Behälter ist, der durch ein Schlitzventil 1 nach der Erfindung verschlossen werden soll, so dass auf den Behälter ein zusätzlicher Druck von Hand ausgeübt werden muss, um die Ausgiessöffnung 10 freizugeben.

Der Basisteil 3 umfasst einen radial nach aussen sich erstreckenden Montageflansch 8 sowie einen axial nach unten abstehenden Dichtkonus 9, der so dimensioniert ist, dass er dichtend in eine Öffnung eines Behälters eingreifen kann, vgl. Fig 2.

Obschon für das integrale Schlitzventil 1 nach der Erfindung andere Kunststoffmaterialien verwendet werden können, ist bevorzugtes Material für den Membranteil 2 ein thermoplastisches Elastomer, wie es z.B. unter der Typenbezeichnung TC3-ABA von der Firma Gummiwerk Kraiburg GmbH + Co./D-84478 Waldkraiburg, bezogen werden kann. Geeignete Materialien für den Basisteil 3 sind insbesondere Polyolefine, z.B. Polypropylen. Es wurde festgestellt, dass sich thermoplastisches Elastomermaterial für den Membranteil 2 und Polypropylen für den Basisteil 3 gut integral zu einem einstückigen Formteil durch Zweikomponentenspritzgiessen verbinden lassen. Wenn erwünscht, könnte der Basisteil 3 jedoch auch aus einem anderen thermoplastischen Kunststoffmaterial bestehen, das geeignet ist, mit einem theremoplastischen Elastomermaterial eine integrale Verbindung einzugehen.

Fig. 3 zeigt schmematisch ein Formwerkzeug für das Zweikomponentenspritzgiessen. Zwischen einem Paar zusammenwirkender Formwerkzeuge 30, 31 ist ein bei 32 durch schraffierte Linien angedeuteter Formraum gebildet, der der Konfiguration des Basisteiles 3 des Schlitzventiles entspricht. Ein axial beweglicher Mittelteil 33 des Formwerkzeuges 31 kann in eine vorgeschobene Stellung gebracht werden, wie dies durch die Pfeile A, B in Fig. 3 angedeutet ist, bei der seine der Kontur des Membranteiles 2 entsprechend konturierte Stirnfläche in Berührung mit der entsprechend konturierten Stirnfläche eines zentralen Bereiches des anderen Formwerkzeuges 30 kommt, so dass ein bei 34 durch kreuzschraffierte Linien angedeuteter Formraum, der der Konfiguration des Membranteiles 2 entspricht, geschlossen ist. Der Formraum 34 erstreckt sich teilweise in den Formraum 32.

In der vorgeschobenen Stellung des Mittelteiles 33 wird in einem ersten Formfüllvorgang das thermoplastische Kunststoffmaterial für die Formung des Basisteiles 3 über eine nicht gezeigte Einspritzöffnung in den Formraum 32 eingegeben. Sobald das Kunststoffmaterial im Formraum 32 soweit abgekühlt ist, dass es eine ausreichende Formbeständigkeit hat, wird der axial bewegliche Mittelteil 33 des Formwerkzeuges 31 bis zu einem Anschlag zurückgezogen, so dass der Formraum 34 für die Formung des Membranteiles 2 gebildet wird. Über eine nicht gezeigte weitere Einspritzöffnung wird dann in einem zweiten Formungsvorgang das Kunststoffmaterial für den Membranteil 2 in den Formraum 34 eingegeben und anschliessend erstarren gelassen.

Beim Einspritzen in den Formraum 34 kommt das Kunststoffmaterial des Membranteiles 2 mit dem des Basisteiles 3 längs der vorerwähnten umfänglichen Wanfbereiche 4, 7 in Berührung, und werden die beiden Kunststoffmaterialien dabei quasi miteinander verschweisst, so dass eine integrale feste Verbindung zustande kommt.

Nach Erstarren der Kunststoffmaterialien in den Formräumen 32 und 34 werden die Formwerkzeuge 30, 31 zur Entformung des gebildeten Zweikomponenten-Formteiles auseinander gefahren. In einem anschliessenden getrennten Arbeitsgang kann in die zentrale Zone 6 des Membranteiles 2 mittels eines Schneidwerkzeuges die schlitzförmige Ausgiessöffnung 10 eingebracht werden.

Fig. 2 zeigt eine Schlitzventilanordnung mit einem das vorbeschriebene und in Fig. 1 gezeigte Schlitzventil nach Montage an einem Behälterhals 11, wobei der Dichtkonus 9 des Schlitzventiles 1 dichtend in die Öffnung 12 des Behälterhalses 11 eingreift. Der Flansch 8 des Schlitzventiles 1 kann dabei auf der oberen Randfläche 13 des Behälterhalses 11 aufliegen.

Auf ein Aussengewinde am Behälterhals 11 ist ein Schraubbefestigungselement 14 aus einem geeigneten formbeständigen thermoplastischen Kunststoffmaterial, wie PE oder PP, aufgeschraubt, um die Position des Schlitzventiles 1 am Behälterhals 11 zu fixieren. Das Schraubbefestigungselement 14 kann einen Klemmbereich 15 haben, der mit seiner Unterseite 16 beim Aufschrauben des Schraubbefestigungselementes 14 auf den Behälterhals 11 mit dem Flansch 8 des Schlitzventiles 1 in Eingriff kommt, so dass der Montageflansch 8 zwischen der oberen Randfläche 13 des Behälterhalses 11 und der Unterfläche 16 des Klemmbereiches 15 des Schraubbefestigungselementes 14 dichtend eingespannt wird. Es versteht sich, dass anstelle eines Schraubbefestigungselementes 14 auch ein in Schnappsitz montierbares derartiges Element vorgesehen werden könnte.

Am Schraubbefestigungselement 14 kann ferner ein Deckel 17 integral über ein Scharnier angelenkt sein, wie dies bei 18 angedeutet ist. Der Deckel 17 kann eine zentrale nach unten ragende Auswölbung 19 aufweisen, deren Konfiguration derjenigen der zentralen Zone 6 des Membranteiles 2 in der konkaven Stellung angepasst ist und eine zusätzliche Schliessfunktion für die schlitzförmige Ausgiessöffnung 10 des Membranteiles 2 schafft. Der Deckel 17 kann in der geschlossenen Position durch Rastsitz am Schraubbefestigungselement 14 gehalten sein und eine Nase aufweisen, mit deren Hilfe er in die Freigabeposition geschwenkt werden kann.

Der Behälterhals 11 kann entweder integraler Bestandteil eines Behälters sein oder, wie es in Fig. 2 angedeutet ist, ein separates Kunststofformteil 23 darstellen, welches in geeigneter Weise, z.B. durch Kleben oder Heissversiegeln, mit dem Behälter 22 verbunden werden kann. Das Kunststofformteil 23 kann aus einem Material mit höherer Formbeständigkeit als die des Behälters 22 bestehen, so dass der Behälter 22, wenn erwünscht, als flexibler Beutel ausgebildet sein kann.

Das Schlitzventil nach der Erfindung könnte auch in anderer als der vorbeschriebenen Weise an einer Behälteröffnung, z.B. durch Kleben, Heissversiegeln oder durch Schnappsitz, unter Weglassung eines Schraubbefestigungselementes permanent befestigt sein. Ferner kann das Schlitzventilelement an jede beliebige Behälter- und Behälteröffnungskonfiguration angepasst werden, so dass die rotationssymmetrische Ausbildung des Schlitzventilelementes nur beispielhaft ist.

Vorausgehend wurde die Erfindung anhand eines Schlitzventiles als separates Bauteil zur lösbaren oder permanenten Montage an einer Behälteröffnung oder Verschlusskappe beschrieben. Das Schlitzventil könnte auch integraler Bestandteil einer Verschlusskappe sein, indem diese mit dem Membranteil durch Zweikomponentenspritzgiessen analog zur vorbeschriebenen Herstellung des Schlitzventiles als einstückiges Formteil ausgebildet wird.

Fig. 4 zeigt eine modifizierte Schlitzventilanordnung mit einem Schlitzventil 1 und einem Schraubbefestigungselement 14 zur Fixierung des Schlitzventiles an einem Behälter (nicht gezeigt). Die Anordnung unterscheidet sich von derjenigen, die in Verbindung mit Fig. 2 vorausgehend beschrieben wurde, im wesentlichen darin, dass am Deckelteil 17 ein Dichtring oder Dichtkonus 20 angeformt ist. In der in Fig. 4 gezeigten Schliesstellung des Deckelteiles 17 greift der Dichtring 20 in eine Öffnung 21 des Schlitzventiles ein, die durch die Stützwand 7 des Basisteiles 3 definiert ist. Die Stützwand 7 ist demzufolge gegenüber der Ausführungsform des Schlitzventiles nach Fig. 1 entsprechend verlängert. Im Bereich der Öffnung 21 liegt der die Ausgiessöffnung aufweisende Bereich des Membranteiles 2 frei und kann durch den Dichtring 20 in die gezeigte konkave Position gestülpt werden. Die Anordnung nach Fig. 4 zeichnet sich durch eine weiter verbesserte Dichtfunktion gegenüber der Anordnung nach Fig. 2 aus. Bezüglich der übrigen Aufbauteile kann auf Fig. 2 und die zugehörige Beschreibung verwiesen werden.

## Patentansprüche

1. Schlitzventil zum Verschliessen einer Behälteröffnung, mit einem eine schlitzförmige Ausgiessöffnung aufweisenden Membranteil aus einem thermoplastischen Elastomermaterial, der mit einem Basisteil aus einem thermoplastischen Kunststoffmaterial, das vom thermoplastischen Elastomermaterial verschieden ist, verbunden ist, wobei der Membranteil (2) einen annähernd kegelstumpfförmigen Umfangswandbereich (4) und der Basisteil (3) eine entsprechend kegelig verlaufende Stützwand (7) aufweisen, **dadurch gekennzeichnet, dass** der Membranteil (2) und der Basisteil (1) längs der Stützwand (7) und des kegelstumpfförmigen Umfangswandbereiches (4) integral einstückig miteinander verbunden sind.

2. Schlitzventil nach Anspruch 1, **dadurch gekennzeichnet, dass** die Stützwand (7) oberseitig des Umfangswandbereiches (4) vorgesehen ist.

3. Schlitzventil nach Anspruch 1, **dadurch gekennzeichnet, dass** der Basisteil (3) mit einem Dichtkonus (9) zur Eingriffnahme mit der Behälteröffnung ausgebildet ist.

4. Schlitzventil nach Anspruch 1, **dadurch gekennzeichnet, dass** das thermoplastische Kunststoffmaterial ein Material aus der die Polyolefine umfassenden Kunststoffmaterialien ist.

5. Schlitzventil nach Anspruch 4, **dadurch gekennzeichnet, dass** das thermoplastische Kunststoffmaterial Polypropylen ist.

6. Schlitzventil nach einem der vorhergehenden Ansprüche, **dadurch gekennzeichnet, dass** der Membranteil (2) dimensioniert ist, damit sich die schlitzförmige Ausgiessöffnung (10) bei Überschreiten eines bestimmten Druckgrenzwertes, der grösser als der Gefälledruck einer abzudichtenden Flüssigkeitsmenge ist, öffnet.

7. Schlitzventil nach einem der vorhergehenden Ansprüche, **dadurch gekennzeichnet, dass** der Membranteil (2) einen zwischen einer konkaven und konvexen Position umstülpbaren, die schlitzförmige Ausgiessöffnung (10) enthaltenden freiliegenden Bereich umfasst.

8. Schlitzventilanordnung, umfassend ein Schlitzventil mit den Merkmalen der Anspruch 1 und 2 in Kombination mit einem an einem Behälterteil montierbaren Kappenteil (14) zur Fixierung des Schlitzventiles am Behälterteil mit einem integral am Kappenteil angelenkten Deckelteil (17), der zwischen einer Freigabe- und Schliesstellung schwenkbar ist, wobei am Deckelteil ein Dichtring (20) zur Abdichtung einer in der Stützwand (7) des Basisteiles (1) des Schlitzventiles vorgesehenen Öffnung (21) integral angeformt ist, an welcher Öffnung ein Bereich des Membranteiles, der die Ausgiessöffnung enthält, freiliegt.

9. Schlitzventilanordnung nach Anspruch 8, **dadurch gekennzeichnet, dass** der Dichtring (20) eine Abmessung hat, dass der die Ausgiessöffnung (10) enthaltende freiliegende Bereich des Membranteiles (2) in eine konkave Position gestülpt ist, wenn sich der Deckelteil (17) in der Schliesstellung befindet.

## Claims

1. A slit valve for closing an opening of a container, including a diaphragm part having a slit-shaped pour opening and formed of a thermoplastic elastomer material, said diaphragm part being connected to a base part formed of a thermoplastic material which is different to said thermoplastic elastomer material, said diaphragm part (2) comprises an esssentially truncated peripheral wall portion (4), and said base part (3) comprises a supporting wall (7) tapered correspondingly to said truncated peripheral wall portion, **characterized in that** said diaphragm part (2) and said base part (3) are integrally connected with each other in a single piece along said supporting wall (7) and said truncated peripheral wall portion (4).

2. The slit valve as set forth in claim 1, **characterized in that** said supporting wall (7) is provided on the upper side of said peripheral wall portion (4).

3. The slit valve as set forth in claim 1, **characterized in that** said base part (3) has a sealing cone (9) for engaging with the opening of the container.

4. The slit valve as set forth in claim 1, **characterized in that** said thermoplastic material is a material of the group of plastics material comprising the polyolefines.

5. The slit valve as set forth in claim 4, **characterized in that** said thermoplastic material is a polypropylene.

6. The slit valve according to one of the preceding claims, **characterized in that** said diaphragm part (2) is dimensioned so that said slit-shaped pour opening (10) is open when a predetermined limiting pressure is exceeded, which is higher than the pressure head of a fluid quantity to be sealed.

7. The slit valve according to one of the preceding claims, **characterized in that** said diaphragm part (2) comprises an exposed portion including said slit-shaped pour opening (10), said exposed portion can be turned inside out between concave and convex positions.

8. A slit valve arrangement including a slit valve having the features according to claims 1 and 2 in combination with a cap part (14) adapted to be mounted to a container part for fixing the slit valve to the container part and having a lid part (17) integrally hinged thereto, said lid part being pivotable between opening and closing positions, whereby a sealing ring (20) for sealing an opening (21) in the supporting wall (7) of said base part (3) of the slit valve is integrally formed to said lid part, a portion of said diaphragm part containing said slit-shaped pour opening is exposed at said opening of the base part.

9. The slit valve arrangement as set forth in claim 8, **characterized in** said sealing ring (20) is dimensioned so that the exposed portion of said diaphragm part (2) having said pour opening (10) is turned inside to a concave position when said lid part (17) is in the closing position.

## Revendications

1. Vanne à fente pour l'obturation d'une ouverture de récipient, comprenant une partie de membrane en un matériau élastomère thermoplastique présentant une ouverture de déversement en forme de fente, qui est reliée à une partie de base en un matériau synthétique thermoplastique qui est différent du matériau élastomère thermoplastique, la partie de membrane (2) présentant une zone de paroi périphérique de forme approximativement tronconique (4) et la partie de base (3) présentant une paroi de support (7) s'étendant en cône de façon correspondante, **caractérisée en ce que** la partie de membrane (2) et la partie de base (1) sont reliées l'une à l'autre le long de la paroi de support (7) et de la zone de paroi périphérique de forme tronconique (4) en ne formant qu'une seule pièce.

2. Vanne à fente selon la revendication 1, **caractérisée en ce que** la paroi de support (7) est prévue du côté supérieur de la zone de paroi périphérique (4).

3. Vanne à fente selon la revendication 1, **caractérisée en ce que** l'élément de base (3) est formé avec un cône d'étanchéité (9) destiné à entrer en contact avec l'ouverture du récipient.

4. Vanne à fente selon la revendication 1, **caractérisée en ce que** le matériau synthétique thermoplastique est un matériau appartenant aux matériaux synthétiques comprenant les polyoléfines.

5. Vanne à fente selon la revendication 4, **caractérisée en ce que** le matériau synthétique thermoplastique est un polypropylène.

6. Vanne à fente selon l'une quelconque des revendications précédentes, **caractérisée en ce que** la partie de membrane (2) est dimensionnée de façon à ce que l'ouverture de déversement en forme de fente (10) s'ouvre lors du dépassement d'une valeur de pression limite déterminée qui est supérieure à la pression due à la gravité exercée par la quantité de fluide à retenir hermétiquement.

7. Vanne à fente selon l'une quelconque des revendications précédentes, **caractérisée en ce que** la partie de membrane (2) présente une zone libre pouvant prendre des positions soit concave soit convexe et contenant l'ouverture de déversement en forme de fente (10).

8. Dispositif de vanne à fente, comprenant une vanne à fente présentant les caractéristiques des revendications 1 et 2, en combinaison avec une partie de chapeau (14) pouvant être montée sur une partie de récipient pour la fixation de la vanne à fente sur la partie de récipient avec une partie de couvercle (17) articulée sur la partie de chapeau en formant une seule pièce avec cette dernière, qui peut pivoter entre une position ouverte et une position fermée, une bague d'obturation (20) servant à boucher une ouverture (21) prévue dans la paroi de support (7) de la partie de base (1) de la vanne à fente, étant formée intégralement dans la partie de couvercle, une zone de la partie de membrane contenant l'ouverture de déversement étant à découvert au niveau de cette ouverture.

9. Dispositif de vanne à fente selon la revendication 8, **caractérisée en ce que** la bague d'obturation (20) a une dimension telle que la zone libre de la partie de membrane (2) contenant l'ouverture de déversement (10) est dans une position concave lorsque la partie de couvercle (17) se trouve dans la position fermée.
